# EUROPEAN PATENT APPLICATION

(11) **EP 2 852 116 A1**
(43) Date of publication of application: **25.03.2015**
(21) Application number: 13185840.9
(22) Date of filing: 24.09.2013
(51) Int. Cl.: H04L 25/02

(54) **Method for complex modulated chirp sounding, a receiver device, a transmission device and a wireless communication system suitable therefore**

(71) Applicant: Airbus Defence and Space GmbH, 85521 Ottobrunn (DE); Airbus SAS, 31700 Blagnac (FR)
(72) Inventor: Heller, Christoph, 82024 Taufkirchen (DE); Blümm, Christian, 81539 München (DE)
(74) Representative: Flügel Preissner Kastel Schober

(57) **Abstract**

The present invention relates to a method for characterizing parameters of a scattering function of a wireless channel, wherein a complex chirp baseband signal is used to produce a chirp signal (16) for channel sounding. Furthermore, the present invention relates to a transmitter device (10) and a receiver device (12) configured to implement the method as well as a wireless communication system comprising a transmitter device (10) and a receiver device (12) and configured to implement the method

## Description

The present invention relates to a method for characterizing parameters of a scattering function of a wireless channel, wherein a chirp signal is used to produce an output signal, said output signal is transmitted over the wireless channel to a receiver, the transmission signal is received and demodulated by the receiver as a demodulated signal and the demodulated signal is analyzed to determine the characterizing parameters of the scattering function. Furthermore, the invention relates to a transmitter device and a receiver device for wireless data communication as well as a wireless communication system comprising a transmitter device and a receiver device suitable for implementing such a method.

In wireless data transmission systems, in particular digitally modulated wireless data transmission systems, in particular systems that use e.g. PSK, QAM, FDM, OFDM or any combination thereof, certain characterizing parameters of a wireless channel are of interest for improving data transmission parameters, e.g. error rates. In certain situations, data transmission is impossible if the wireless data transmission system is not matched according to the characteristics of the wireless channel.

To acquire knowledge about the characterizing parameters, methods for directly or indirectly measuring the parameters are known. Generally, a method comprising the steps of sending a reference signal through a channel via a transmitter, thus exciting the wireless channel, receiving the signal via a receiver, comparing the received signal to the known reference signal and deriving characterizing parameters of the scattering function from the result has been widely adopted for this purpose. This kind of characterizing method is called channel sounding. Often, chirp type signals are used as reference signals.

One frequently used method uses a voltage controlled oscillator (VCO) to sweep a radio frequency real-valued sine signal in frequency, thus creating the chirp signal. Such a chirp signal allows for measurement of channel delay and Doppler shift both for a line of sight channel as well as for multipath components created by reflections. The channel delays and Doppler shifts measured are determined by the scattering function of the wireless channel and can be used to create a model or approximation of the scattering function. The precision of this method's results is highly dependent on the quality and precision of the voltage controlled oscillator. Furthermore, since the transmitted chirp and reference signals, as generated by voltage controlled oscillators, are real-valued signals, filters are required to remove unwanted frequencies during signal processing.

The present invention aims to solve the problem of simplifying a method for characterizing parameters of a scattering function of a wireless channel and of providing a device for carrying out said simplified method.

To this end, a method according to claim 1 is proposed in which the complex chirp baseband signal generator is used to produce a complex chirp signal comprising an inphase component and a quadrature component, an I/Q modulation of the chirp signal is performed to produce a transmission signal, the transmission signal is transmitted over the wireless channel to a receiver, the transmission signal is received by means of a receiver as a received signal, an I/Q demodulation of the received signal is performed to produce a complex demodulated signal having an inphase component and a quadrature component, the complex demodulated signal is mixed with an inverse of the complex chirp baseband signal to produce a characteristic signal, the characteristic signal is transformed to determine its frequency components and the frequency components are analyzed to determine the characterizing parameters of the scattering function.

The method according to claim 1 allows for the frequency-versus-time characteristic of the chirp signal to be controlled more precisely than before. In particular, the chirp signal achieved by this method can be completely linear in the frequency domain. As a result, the frequency of the chirp signal at any given point in time is precisely defined. Traditional methods, e.g. using the above-mentioned VCO, are less precise due to a delay required for the VCO to react to a change in input by a change in frequency of its output and due to the imperfect frequency-versus-voltage characteristics of the VCO. It is thus no longer necessary to quantify this delay and the input-to-frequency relation of traditional controllable real-value oscillators in order to achieve satisfactory results.

A real-valued signal has two spectral components in the frequency domain at +f and -f, one of which would need to be filtered. A complex chirp signal as proposed herein has no parasitic spectral/frequency components which would require filters. Since the complex chirp signal only has one spectral component, a further source of distortion of the received signal is avoided and the precision of measurement of the scattering function is increased. The linearity of the chirp becomes less perturbed. A preferred method of producing a linear chirp is using direct digital synthesis as this method can provide highly precise linear chirps.

Advantageous embodiments of the invention are the subject matter of dependent claims 2 to 5.

The complex chirp baseband signal may use a frequency ramp with a predetermined slope as the complex chirp baseband signal. Such a frequency ramp has a time-frequency relation that is easy to determine and easy to recognize. Furthermore, an inverse of such a frequency ramp can easily be created.

A frequency ramp with a predetermined slope may be used as the inverse complex chirp baseband signal wherein the predetermined slope is the negative of the predetermined slope used for the complex chirp baseband signal.

The frequency components acquired from the characteristic signal may be transformed into power delay profiles. Such power delay profiles allow the identification of the different propagation paths formed within a wireless channel by reflections.

The above-mentioned steps may be repeatedly performed to determine a multitude of power delay profiles. The power delay profiles from each repetition may be stored in a data memory and consecutive power delay profiles may be analyzed to determine Doppler shifts. In this way, the channel delays and Doppler shift characteristics for each wireless channel path, both line of sight as well as reflected, may be precisely determined.

The problem is further solved by a transmitter device for wireless data communication according to claim 6 which comprises a chirp baseband signal generator configured to produce a complex output signal comprising an inphase component and a quadrature component and configured to be used to implement the methods described above. The transmitter device may comprise an I/Q modulator.

The problem is further solved by a receiver device for wireless data communication according to claim 7 which comprises an inverse complex chirp baseband signal generator producing a complex output signal. Furthermore, the receiver device comprises a signal mixer configured to mix a demodulated signal comprising an inphase component and a quadrature component with the complex output signal of the inverse complex chirp baseband signal generator to produce a characteristic signal and configured to be usable to implement the methods described above.

The receiver device allows for easy and reliable elimination of the complex chirp baseband signal from the demodulated signal, thus allowing any distortions, reflections or other artifacts of the wireless transmission to stand out clearly. Due to the single-frequency nature of the complex chirp baseband signal, no further filters are required.

Advantageous embodiments of the receiver device are the subject matter of the dependent claims 8 to 10.

The receiver device may comprise a frequency analysis device for determining frequency components of the characteristic signal. The frequency analysis device is configured to provide a delay spread function of a chirp transmission. The frequency analysis device may have a fast Fourier transform unit. Such a unit provides efficient and rapid frequency analysis.

The receiver device may comprise a data memory configured to store the delay spread functions of a multitude of consecutive chirp transmissions. In this way, the frequency shifts of both the line of sight path and multipath components may be characterized to yield the scattering function. In particular, Doppler shifts may be characterized in this way. Furthermore, the influence of factors that have an effect that is longer than that of a single chirp signal or only occurs after the single chirp signal has finished may be included in the characterization of the scattering function.

The receiver device may further comprise a channel scattering function characterization device for analyzing the delay spread functions stored in the data memory.

The invention will be further explained with the aid of an embodiment as outlined in the schematic drawings which show:
- Fig. 1: a schematic drawing of a transmitter device and a receiver device suitable for implementing a method according to an embodiment of the invention;
- Fig. 2: a time domain view of I (inphase) and Q (quadrature) components of an output signal produced on the basis of a complex chirp baseband signal;
- Fig. 3: a view of the evolution of short-time spectra of the output signal over the time of the chirp of Fig. 2;
- Fig. 4: an example of surroundings influencing a scattering function of the wireless channel;
- Fig. 5: a time domain view of I and Q components of a complex demodulated signal;
- Fig. 6: a view of the evolution of short-time spectra of the complex demodulated signal Fig. 5 comprising I and Q components over the time of the chirp;
- Fig. 7: a time domain view of a characteristic signal obtained by mixing the signal from Fig. 5 and 6 with an inverse complex chirp baseband signal;
- Fig. 8: a view of the evolution of short-time spectra of the signal from Fig. 7 over the time of the chirp;
- Fig. 9: a scattering function of a real-world channel, characterized using the method according to an embodiment of the invention;
- Fig. 10: a power delay profile of the scattering function according to Fig. 9 and
- Fig. 11: a Doppler spectrum of the scattering function according to Fig. 9.

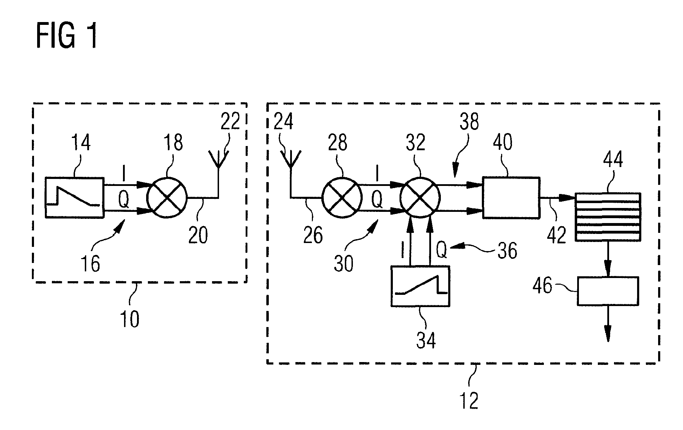

Fig. 1 shows a circuit diagram of a transmitter 10 and a receiver 12. The transmitter 10 comprises a chirp baseband signal generator 14 which produces a complex output signal 16 comprising an inphase component I and a quadrature component Q. The complex output signal 16 is fed to an I/Q modulator which mixes the complex output signal 16 with a constant frequency carrier, resulting in a transmission signal 20.

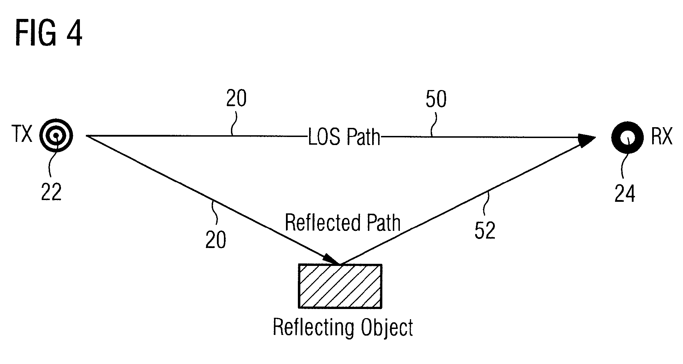

The transmission signal 20 is transmitted wirelessly as a chirp transmission via an antenna 22 to an antenna 24 of the receiver 12. Between the antenna 22 of the transmitter and the antenna 24 of the receiver, the signal 20 travels wirelessly and is possibly reflected and/or attenuated by surrounding objects as is shown in Fig. 4. The result of these reflections is that delayed and usually weaker copies of the signal 20 will be received by the antenna 24. These copies will interfere with each other and with the original signal. Furthermore, due to movement of the antenna 22, the antenna 24 or the surrounding objects, the reflections of the signal 20 may be subject to individual Doppler shifts. The resulting signal received by the antenna 24 will thus be a sum of individually time and/or Doppler shifted signals from all existing wireless signal paths.

The antenna 24 receives the propagated transmitt signal as a received signal 26 which is fed to an I/Q demodulator 28. The I/Q demodulator 28 produces a demodulated complex demodulated signal 30 which comprises two components, namely an inphase input component (I) and a quadrature input component (Q). The demodulated signal 30 components (I and Q) are fed through a signal mixer 32 which mixes the demodulated signal components I and Q with a complex output 36 of an inverse complex chirp baseband signal generator 34.

The signal mixer 32 produces a characteristic signal 38 in which the components of the original complex output signal 16 of the chirp baseband signal generator 14 have been translated onto the 0 Hz frequency line and only the influences of the time-shifted multipath components remain as beat frequencies. The characteristic signal 38 is analyzed by means of a frequency analysis device 40 to produce a delay spread function 42 representing the channel delay of any wireless channels. In the present embodiment, the frequency analysis device 40 carries out a fast Fourier transform (FFT) of the demodulated output signal 38 to produce the delay spread function 42.

Multiple delay spread functions 42 are obtained in this way in sequence and stored in a memory 44. The delay spread functions 42 from the memory 44 are then analyzed by a frequency shift characterization device 46 which determines a channel scattering function of the wireless channel therefrom.

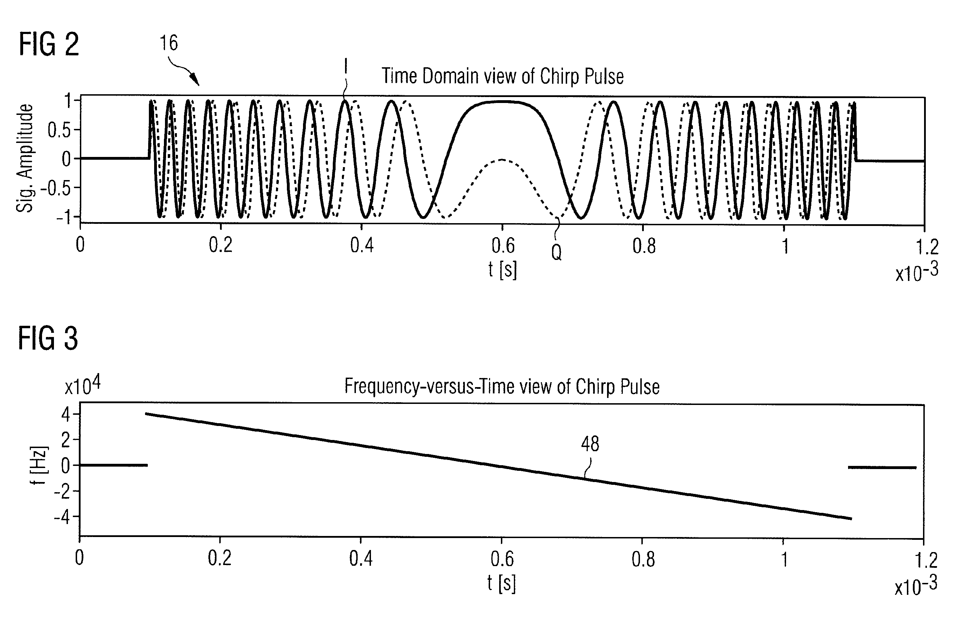

As an example, Fig. 3 shows a frequency-versus-time plot of a chirp baseband signal which is suitable for use in the invention. The chirp baseband signal has a single frequency component that is denoted by the base sweep spectral line 48 and linearly shifts from a frequency of 40 kHz to -40 kHz within a timeframe of 1 ms.

Depending on the application, sweeps over different frequency ranges and over different time frames may be used. Often, the frequency sweep will symmetrically sweep over a frequency range from f to -f wherein f will depend on the bandwidth of the channel. In mobile data transmission applications, f may for example be between 5 MHz and 75 MHz, possibly 25 MHz. Just as well, the timeframe of the sweep will depend on the kind of channel that is being sounded by the present invention. Thus, the timeframe of the sweep may for example be between 10 µs and 500 µs, possibly 100 µs. of course, in certain situations, an asymmetric sweep, e.g. from f to 0 or from 2f to -f may be required.

The complex output signal 16 generated by a chirp baseband signal generator 14 which uses the chirp baseband signal of Fig. 3 is shown in Fig. 2. After transmission of the signal 20 via the antenna 22 to the antenna 24, the received signal 26 comprises a superposition of the signals that travelled along both the line-of-sight path 50 and the reflected path 52.

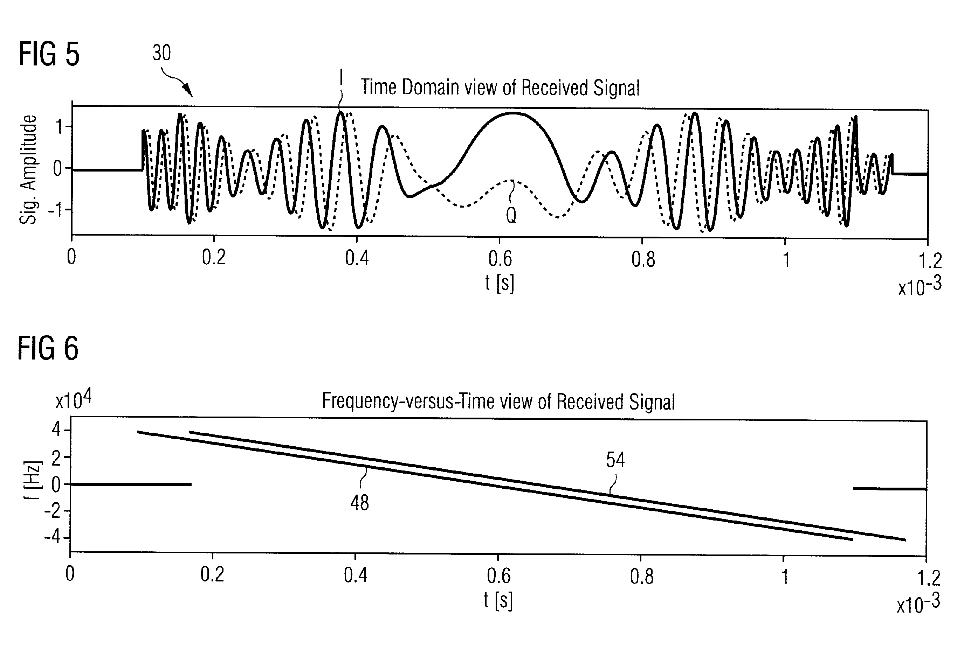

The components I and Q of the resulting demodulated signal 30 are shown in Fig. 5. When the components I and Q are transformed into the frequency domain, it can be seen that the base sweep spectral line 48 is present which corresponds to the signal that travelled along the line-of-sight path 50 as well as a delayed spectral line 54 that is the result of the wireless signal travelling along the reflected path 52.

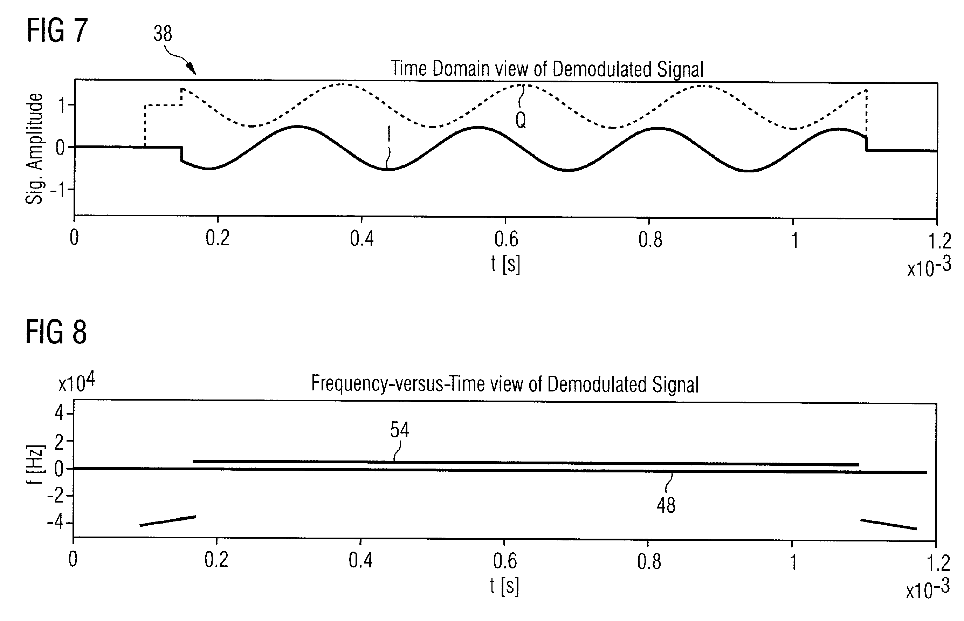

As shown in Fig. 7 and 8, mixing the components I and Q with an inverse complex chirp baseband signal makes the slope of the chirp signal disappear and causes the frequency components that are the result of reflections to appear as beat frequencies offset from the basic spectral line 48 that are mostly constant over the time of the chirp signal. To achieve this effect, the complex output 36 of the inverse complex chirp baseband signal generator 34 may be chosen such that if it would be mixed with the complex output signal 16 produced by the chirp baseband signal generator 14, the results would be one flat spectral line at a known base frequency, preferably at 0 Hz.

Generally, the inverse complex chirp baseband signal may be obtained by swapping the I and Q components of the complex chirp baseband signal.

Departing from the characteristic signal 38, a delay spread function 42 may be calculated by means of a Fourier transform carried out in the frequency analysis device 40.

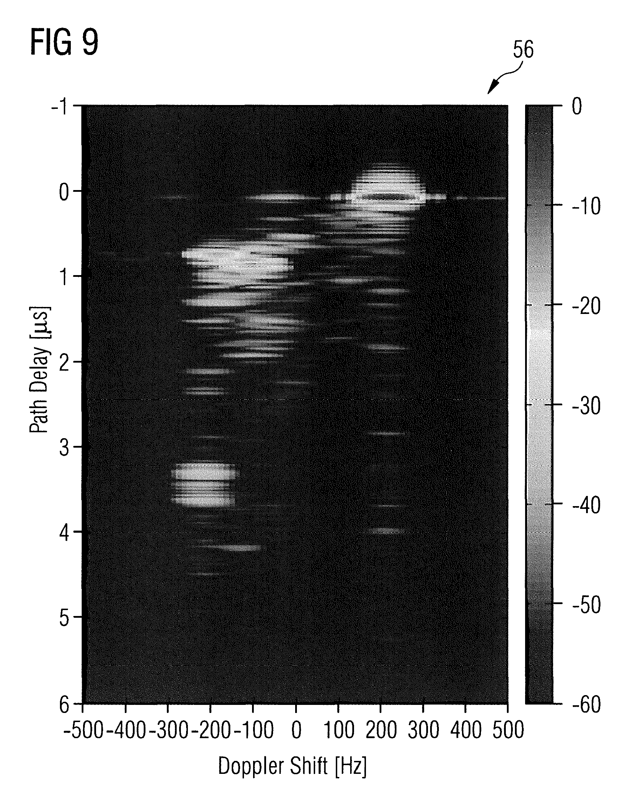

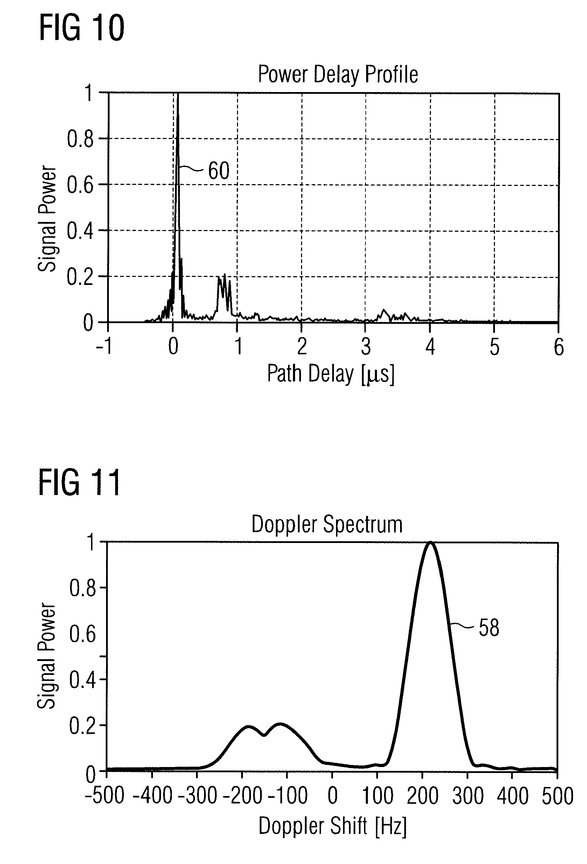

When multiple such delay spread functions 42 are stored in the memory 44, the frequency shift characterization device 46 can carry out a fast Fourier transform (FFT) over the delay spread functions 42 which will result in a representation 56 of the channel scattering function as shown in Fig. 9. Integration over the path delay of the representation 56 results in the Doppler spectrum 58 as shown in Fig. 11. Integration over the Doppler shift of the representation 56 results in the power delay profile 60 as shown in Fig. 10. Thus, the scattering function of the wireless channel may be characterized by using the data contained the representation 56.

Due to the double fast Fourier transform, once in the frequency analysis device 40 and once in the frequency shift characterization device 46, a high process gain is achieved. As a result, meaningful information can be recovered even from received signals 26 with a low signal-to-noise ratio.

The present invention can be implemented using commercial off-the-shelf components and, despite its easy implementation improves the precision of the scattering function acquired through its use.

### List of reference numerals

- 10: transmitter
- 12: receiver
- 14: complex chirp baseband signal generator
- 16: complex chirp signal
- 18: I/Q modulator
- 20: transmission signal
- 22: antenna
- 24: antenna
- 26: received signal
- 28: I/Q demodulator
- 30: demodulated signal
- 32: signal mixer
- 34: inverse complex chirp baseband signal generator
- 36: complex output
- 38: characteristic signal
- 40: frequency analysis device
- 42: delay spread function
- 44: memory
- 46: frequency shift characterization device
- 48: spectral line
- 50: line-of-sight path
- 52: reflected path
- 54: delayed spectral line
- 56: representation
- 58: Doppler spectrum
- 60: power delay profile

## Claims

1. Method for characterizing parameters of a scattering function of a wireless channel, comprising the steps:
- Using a complex chirp baseband signal generator (14) to produce a complex chirp signal (16) comprising an inphase component (I) and a quadrature (Q) component;
- Performing an I/Q modulation of the complex chirp signal (16) to produce a transmission signal (20);
- Transmitting the transmission signal (20) over the wireless channel to a receiver (12);
- Receiving the transmission signal as a received signal (26);
- Performing an I/Q demodulation of the received signal (26) to produce a demodulated signal (30) comprising an inphase component and a quadrature component;
- Mixing the demodulated signal (30) with an inverse complex chirp baseband signal to produce a characteristic signal (38);
- Transforming the characteristic signal (38) to determine its frequency components and
- Analyzing the frequency components to determine the characterizing parameters of the scattering function.

2. Method according to claim 1, comprising the step:
- Using a linear frequency sweep with a predetermined slope as the complex chirp baseband signal.

3. Method according to claim 2, comprising the step:
- Using a linear frequency sweep with a predetermined slope as the inverse complex chirp baseband signal, wherein the predetermined slope is the negative of the slope used in the complex chirp baseband signal.

4. Method according to any of the preceding claims, comprising the step:
- Transforming the frequency components into power delay profiles (60).

5. Method according to claim 4, comprising the step:
- Repeatedly performing the steps of claim 4;
- Storing the power delay profiles (60) from each repetition in a data memory (44) and
- Analyzing consecutive power delay profiles (60) to determine Doppler shifts (58) .

6. Transmitter device (10) for wireless data communication comprising a chirp baseband signal generator (14) configured to produce a complex output signal (16) comprising an inphase component (I) and a quadrature component (Q) and configured to be usable to implement the method according to any of the claims 1 to 5.

7. Receiver device (12) for wireless data communication comprising an inverse complex chirp baseband signal generator (34) producing a complex output signal (36) and a signal mixer (32) configured to mix a demodulated complex demodulated signal (30) comprising an inphase component (I) and a quadrature component (Q) with the complex output signal (36) to produce a characteristic signal (38) and configured to be usable to implement the method according to any of the claims 1 to 5.

8. Receiver device according to claim 7, further comprising a frequency analysis device (40), in particular a frequency analysis device (40) having a fast Fourier transform unit for determining frequency components of the characteristic signal (38), wherein the frequency analysis device (40) is configured to provide a delay spread function (42) of a chirp transmission.

9. Receiver device according to claim 8, **characterized in that** the receiver device comprises a data memory (44) configured to store the delay spread functions (42) of a multitude of consecutive chirp transmissions.

10. Receiver device according to claim 9, **characterized in that** the receiver device comprises a frequency shift characterization device (46) for analyzing the delay spread functions (42) stored in the data memory (44).

11. Wireless communication system comprising a transmitter device (10) according to claim 6 and a receiver device (12) according to any of the claims 7 to 10 and configured to implement the method according to any of the claims 1 to 5.
